# EUROPEAN PATENT APPLICATION

(11) **EP 4 807 480 A1**
(43) Date of publication of application: **16.09.2026**
(21) Application number: 25162984.6
(22) Date of filing: 11.03.2025
(51) Int. Cl.: G05D 1/20

(54) **AIRCRAFT GUIDANCE AND/OR NAVIGATION SYSTEM USING ARTIFICIAL MAGNETIC FIELDS**

(71) Applicant: Airbus Defence and Space GmbH, 82024 Taufkirchen (DE)
(72) Inventor: Semann, Mika, 82024 Taufkirchen (DE)
(74) Representative: Gunzelmann, Rainer

(57) **Abstract**

The present disclosure relates to a method M, in an aircraft guidance and/or navigation system S, to guide an aircraft AC towards or from a landing site LS using measurements, onboard the aircraft, of one or more unique artificial magnetic fields MF1, MF2, MFN assigned to a vicinity V of the landing site. The present disclosure also relates to a magnetic ground infrastructure MGI in the aircraft guidance and/or navigation system S, to guide the aircraft AC towards or from the landing site LS, the magnetic ground infrastructure comprising one or more emitters E1, E2, EN assigned to the vicinity V of the landing site, each emitter being adapted to generate a respective unique artificial magnetic field MF1, MF2, MFN. The present disclosure also relates to the aircraft AC in the aircraft guidance and/or navigation system S, to guide the aircraft towards or from the landing site LS, the aircraft comprising one or more magnetometers MM1, MM2, MMN adapted to detect the one or more unique artificial magnetic fields MF1, MF2, MFN assigned to the vicinity V of the landing site; and a navigation system NS adapted to calculate a relative or an absolute position of the aircraft in relation to the landing site, based on detection result of the one or more magnetometers.

## Description

### Technical Field

The present disclosure generally relates to an aircraft guidance and/or navigation system using artificial magnetic fields. In particular, the present disclosure relates to a method, a magnetic ground infrastructure and an aircraft for guiding the aircraft towards (or from) a landing site using one or more unique artificial magnetic fields assigned to a vicinity of the landing site.

### Background

Today, the Global Navigation Satellite System (GNSS) is widely used for navigation including landing aircrafts on airports and airfields or other suitable areas. However, GNSS is potentially susceptible to attacks from malevolent third parties, or in other words, GNSS may be jammed and/or spoofed. While for systems guided by human beings a visual navigation or visual confirmation of a machine-plotted path can be performed, this is not necessarily the case for (aerial) vehicles operating autonomously and without data link.

One or more of the requirements for a navigation system that is capable to work in GNSS-denied environments resides in that said navigation system should work potentially anywhere on the planet, under all weather conditions, day and night and/or be resilient against attacks from malevolent third parties. Said requirements are even harder to fulfil when the (aerial) vehicle is not to emit any signals in order to be undetectable - in such cases, solutions based e.g. on (LIDAR) or (RADAR) cannot be used.

One of the potential solutions may reside in using the earth's magnetic anomaly field and sensitive magnetometers to measure the magnitude and/or direction of said anomaly field. Notably, to the best knowledge of the present inventors, magnetic anomaly field navigation currently is a research topic, but has not yet matured into any available products on the market.

However, using such a solution based on earth's magnetic anomaly field for area navigation would require precise maps of any magnetic anomalies of the desired area. Additionally, temporal changes in the natural magnetic field e.g. due to solar storms as well as effects caused by the (aerial) vehicle itself need to be filtered out, which is a highly complex task due to the very weak signal strength of the earth's magnetic anomaly field (i.e., of the lithosphere compared to the earth's core magnetic field).

### Summary

Accordingly, there is a need for a solution for guiding and navigating (aerial) vehicles, especially unmanned aircrafts towards and on suitable landing sites/airfields (or from such landing sites/airfields) in GNSS denied environments.

These objects are solved by the present invention as defined by the independent claims. Preferred embodiments are defined by the dependent claims.

In a first aspect to better understand the present disclosure, there is provided a method, in an aircraft guidance and/or navigation system, to guide an aircraft towards or from a landing site using measurements, onboard the aircraft, of one or more unique artificial magnetic fields assigned to a vicinity of the landing site.

Without loss of generality and subject to further description herein below, a "landing site" preferably is an elongated site for landing an aircraft, such as a runway, or preferably is a substantially circular or quadratic site for landing an aircraft, such as a heliport. Moreover, a "vicinity" in relation to said landing site preferably is an area or zone in the approach path of the aircraft towards (or from) the landing site, particularly preferably close to a (designated) touch down point of aircraft on the landing site.

In a first refinement of the first aspect, each of the one or more unique artificial magnetic fields preferably has its own unique signature. In that case, at least one of the unique signatures preferably is generated by a switchable magnet, wherein particularly preferably, the unique signature is constituted by a unique switching frequency, unique field strength, unique field directionality, unique field size and/or unique field shape of the field emitted by the switchable magnet; and/or at least one of the unique artificial fields is preferably generated by a permanent magnet, wherein particularly preferably, the unique signature is constituted by a unique field strength, unique field directionality, unique field size and/or unique field shape of the field emitted by the permanent magnet.

In a second refinement of the first aspect, when the aircraft is guided towards the landing site, the method preferably further comprises detecting a first unique signature of a first unique artificial magnetic field defining a first waypoint; calculating a first position of the aircraft by identifying a position of the first detected unique artificial magnetic field using the first unique signature; calculating a first direction and distance to a second waypoint defined by a second unique artificial magnetic field having a second unique signature; detecting the second unique signature of the second unique artificial magnetic field defining the second waypoint; calculating a second position of the aircraft by identifying a position of the second detected unique artificial magnetic field using the second unique signature; and calculating a second direction and distance to the landing site defined by a third unique artificial magnetic field having a third unique signature. In addition, the method preferably further comprises, between calculating the first direction and distance and detecting the second unique signature, using an inertial measurement unit of the aircraft to navigate to the second waypoint; and after calculating the second direction and distance, using the inertial measurement unit to navigate to the landing site. Moreover, the method preferably further comprises, before detecting the first unique signature, navigating the aircraft to an approach site of the landing site by a navigation system of the aircraft.

In a second aspect of to better understand the present disclosure, there is provided a magnetic ground infrastructure in an aircraft guidance and/or navigation system, to guide an aircraft towards or from a landing site, the magnetic ground infrastructure comprising one or more emitters assigned to a vicinity of the landing site, each emitter being adapted to generate a respective unique artificial magnetic field.

In a first refinement of the second aspect, each of the one or more unique artificial magnetic fields preferably has its own unique signature. In that case, at least one of the emitters preferably is a switchable magnet, wherein particularly preferably, the unique signature is constituted by a unique switching frequency, unique field strength, unique field directionality, unique field size and/or unique field shape of the field emitted by the switchable magnet; and/or at least one of the emitters preferably is a permanent magnet, wherein particularly preferably, the unique signature is constituted by a unique field strength, unique field directionality, unique field size and/or unique field shape of the field emitted by the permanent magnet.

In a second refinement of the second aspect, additionally or alternatively, at least one of the emitters preferably is stationary; and/or at least one of the emitters preferably is mobile.

In a third refinement of the second aspect, additionally or alternatively, the magnetic ground infrastructure preferably further comprises two or more of the emitters in a predetermined mutual relationship, wherein particularly preferably, the predetermined mutual relationship is unique field strengths of the fields emitted by the emitters, unique orientations of the fields emitted by the emitters and/or unique mutual distances between the emitters.

In a fourth refinement of the second aspect, additionally or alternatively, the magnetic ground infrastructure preferably further comprises two or more of the emitters arranged in one or more mutually parallel rows towards or from the landing site, particularly preferably arranged in one or more mutually parallel straight lines, most particularly preferably arranged with a centreline of emitters each having a predetermined level of field strength, an elongation of said centreline intersecting with the landing site, and with at least one side-line of emitters (i) being parallel to the centreline and (ii) each having a field strength different from (preferably below the) predetermined level.

In a fifth refinement of the second aspect, alternatively to the fourth refinement, the magnetic ground infrastructure preferably further comprises four or more of the emitters arranged in at least two rows converging, in the manner of a funnel, towards or from the landing site, particularly preferably arranged in at least two straight lines.

In a third aspect of to better understand the present disclosure, there is provided an aircraft in an aircraft guidance and/or navigation system, to guide the aircraft towards or from a landing site, the aircraft comprising one or more magnetometers adapted to detect one or more unique artificial magnetic fields assigned to a vicinity of the landing site; and a navigation system adapted to calculate a relative or an absolute position of the aircraft in relation to the landing site, based on detection result of the one or more magnetometers.

In a first refinement of the third aspect, the aircraft preferably further comprises an inertial measurement unit adapted to assist the navigation system by navigating between a first waypoint defined by a first unique artificial magnetic field and a second waypoint defined by a second unique artificial magnetic field.

In a third refinement of the third aspect, when there is a straight centreline of unique artificial magnetic fields each having a predetermined level of field strength, an elongation of said centreline intersecting with the landing site, and when there further is at least one straight side-line of unique artificial magnetic fields (i) being parallel to the centreline and (ii) each having a field strength different from (preferably below the) predetermined level, the navigation system preferably is adapted to indicate, if the field strength is below the predetermined level, a path along a strongest magnetic field strength for the aircraft to follow.

In a fourth refinement of the third aspect, alternatively to the third refinement, when there are four or more of the unique artificial magnetic fields arranged in at least two straight lines converging, in the manner of a funnel, towards or from the landing site, the navigation system is preferably adapted to indicate a path along a most different, particularly preferably smallest, magnetic field strength for the aircraft to follow.

Without loss of generality, the present disclosure can be summarized as follows:
- Aircraft guidance and/or navigation system using an artificial (man-made) magnetic ground infrastructure, an aircraft having a navigation system and a magnetometer on board, in which the magnetometer measures the magnetic field strength and/or direction of the artificial magnetic ground infrastructure and the navigation system uses this for absolute or relative (e.g. distance/direction relative to a landing strip or touch down point) positioning and navigation. In analogy, one may think of runway lights guiding a pilot towards the runway and helping him to maintain the correct landing directions and altitude and hit the desired touch down point.
- Potential features of the magnetic ground infrastructure:
   o The artificial magnetic field(s) is produced by a stationary and/or mobile magnetic infrastructure in the vicinity of the landing strip or touch down point (mobile magnetic infrastructure might be used for ad-hoc definition of a runway.
   ∘ The magnetic infrastructure consists of permanent and/or electrical (switchable) magnets.
   ∘ The magnetic infrastructure is installed above, on or below the ground.
   ∘ The magnetic infrastructure is arranged as points, lines or areas or a mixture hereof.
   ∘ Magnets are attached to iron structures (in order to generate a specific size or shape of the magnetic field).
   ∘ Magnets are positioned in elongation of a landing strip or along a defined flight path towards the landing strip or touch down point.
   ∘ Magnets have omnidirectional or directional field characteristics (in the latter case allowing to identify specific directions / magnetic vector field).
   ∘ Magnets are located on known positions relative to the landing strip or touch down point.
   ∘ The artificial magnetic field provides at least one direction which is usable to identify the flight direction towards the landing strip or touch down point.
   ∘ Magnets have known magnetic field strengths (in order to identify them in position or order or number e.g. a known number of magnets lead to the desired touch down point or a specific field strength indicates a certain direction or distance to the landing strip or touch down point.
   ∘ A known arrangement of a selection of magnets (different strength of the magnets and/or different orientation of the magnets and/or position of the magnets relative to each other, e.g. a row of magnets with each row having a unique distance to the next row or stronger magnets in the centreline and weaker ones beside the centreline etc.) provides a unique fingerprint and therefore a known position detectable by the vehicle like a control point which then is usable for relative or absolute positioning of the aircraft.
   ∘ An order of magnets with different strengths and/or magnetic field orientation defines a desired direction towards the landing strip or touch down point (note: when magnets are switchable different flight paths can be defined).
   ∘ On the ground a runway or other areas for the aircraft to manoeuvre on, contain magnetic field infrastructure specifically electric cables allowing the aircraft to autonomously follow a predefined line or avoid to leave the runway or other area.
   ∘ A magnetic infrastructure which forms a line of individual and switchable magnetic fields could be used to allow "follow me" manoeuvres e.g. guide the aircraft to a parking position by e.g. following the strongest signal.
   ∘ A desired glidepath is defined by 3D waypoints (the 3D waypoints are defined by magnetic total field strength and/or magnetic field vector values).
   ∘ Magnetic infrastructure defines a funnel i.e. the boarders of the funnel are defined by artificial magnetic fields and the aircraft will be guides to the wider end of the funnel (with lower precision needed for this) then the funnel tapers towards the touch down point. The aircraft will measure the magnetic strength and keeps inside the funnel by seeking for the smallest field strengths.
- Potential features of the aircraft/the navigation system:
   o One or more magnetometers are mounted on the aircraft in a defined distance to each other and in a known angle relative to a local aircraft coordinate system (therefore orientation of the magnetometers relative to the main flight direction is known, e.g. 90°).
   ∘ The navigation system constantly receives sensor data from the magnetometers and matches this data with data stored in a database in order to calculate an absolute position on or above the earth's surface or to enhance position data from other sources (e.g. a vision based system).
   ∘ The artificial magnetic field(s) are used for guidance of the aircraft in addition or without using the earth's magnetic (anomaly) field.
   ∘ A known signal strength at a unique and detectable position is used for calculating the altitude of a flying vehicle and therefore allows to follow a suitable (vertical) glidepath for the aircraft.
   ∘ The aircraft contains an altitude measuring device e.g. a barometer which is connected to the navigation system.
   ∘ The altitude measuring device e.g. a barometer is used to estimate the field strength for a given flight altitude for the magnetic field infrastructure.
   ∘ The aircrafts navigation system contains an IMU or inertial measurement unit (the IMU is used to navigate between waypoints marked with an artificial magnetic field).
   ∘ The navigation system is capable to calculate a speed value based on at least two identified magnetic infrastructure components (magnets/magnetic fields).
- Method: method to guide an aircraft towards a landing strip or touch down point using unique artificial magnetic fields assigned to vicinity of the landing strip or touch down point using measurements of the artificial magnetic field onboard the aircraft (vehicle). Example:
   o Navigate aircraft to approach point or area of the desired landing strip or touch down point with navigation system e.g. using magnetic anomaly field or a vision based system
   o Detect fingerprint of a first artificial magnetic field(s) defining a first waypoint
   ∘ Calculate first position of aircraft by identifying the fingerprint of the first detected artificial magnetic field in a list of artificial magnetic fields and their Iotations
   ∘ Calculate direction and distance to a second waypoint defined by a second artificial magnetic field and its unique fingerprint
   ∘ Use inertial measurement unit to navigate to second waypoint (note: waypoints are spaced close enough to each other so that sensor drift of IMU is too low to miss the waypoint)
   ∘ Detect fingerprint of a second artificial magnetic field(s) defining a second waypoint
   ∘ Verify aircraft's position to be at the second waypoint
   ∘ Calculate direction and distance to desired landing strip or touch down point defined by a unique artificial magnetic field
   ∘ Use inertial measurement unit to navigate to desired landing strip or touch down point
- Other methods:
   ∘ 1. Method to guide an aircraft (or vehicle in general) in the air or on the ground by following an artificial magnetic infrastructure e.g. point or line markers embedded in the ground surface (e.g. tarmac) which indicate a centreline to be followed by the aircraft. In this case the field strength continuously measured by the aircraft would get lower once the aircraft would move away from that centreline. So the aircraft would just need to follow the line of the strongest magnetic field strength in one direction (no 180° turns).
   ∘ 2. Method to guide an aircraft (or vehicle in general) in the air or on the ground by using a funnel defined by artificial magnetic fields
   ∘ 3. Method to guide an aircraft (or vehicle in general) to follow switchable magnets (e.g. arranged in a row) cause dynamic magnetic fields by the vehicle just following the strongest signal (advantage: field strengths can be stronger than with a static field with the same costs, less complex sensors needed, harder to detect etc.)
- The invention shares some concepts from approach lighting at airports.

In addition, the present disclosure enables the following advantages:
- Enabling GNSS-independent automatic aircraft landing that is resilient against malevolent third party attacks (i.e., can be hardly spoofed or jammed)
- Enabling GNSS-independent automatic aircraft landing that works in all weather conditions
- Enabling GNSS-independent automatic aircraft landing that works day and night ("24/7")
- Enabling GNSS-independent automatic aircraft landing that works potentially everywhere in the world
- Enabling use of artificial magnetic field(s) for guidance of the aircraft AC in addition to, or even without using at all, the earth's magnetic (anomaly) field
- Enabling a use of a known signal strength (of the artificial magnetic fields) at a unique and detectable position for calculating the altitude of an aerial vehicle, thus allowing the aircraft to follow a suitable (vertical) glidepath

### Brief Description of the Drawings

The embodiments of the technique presented herein are described herein below with reference to the accompanying drawings, in which:
- Fig. 1: shows a system (such as an aircraft guidance and/or navigation system) according an embodiment of the present disclosure, which comprises a magnetic ground infrastructure and an aircraft according to embodiments of the present disclosure;
- Fig. 2A: shows a first implementation of the system (such as the aircraft guidance and/or navigation system) that comprises the magnetic ground infrastructure and the aircraft according to embodiments of the present disclosure;
- Fig. 2B: shows a second implementation of the system (such as the aircraft guidance and/or navigation system) that comprises the magnetic ground infrastructure and the aircraft according to embodiments of the present disclosure; and
- Fig. 3: shows a method in the system (such as the aircraft guidance and/or navigation system) according to an embodiment of the present disclosure.

### Detailed Description

In the following description, for purposes of explanation and not limitation, specific details are set forth in order to provide a thorough understanding of the technique presented herein. It will be apparent to one skilled in the art that the present technique may be practiced in other embodiments that depart from these specific details.

Moreover, those skilled in the art will appreciate that the services, functions and steps explained herein may be implemented using software functioning in conjunction with a programmed microprocessor or using an Application Specific Integrated Circuit (ASIC), a Digital Signal Processor (DSP) or general-purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein. This applies especially to the aspects of the navigation system NS onboard the aircraft AC.

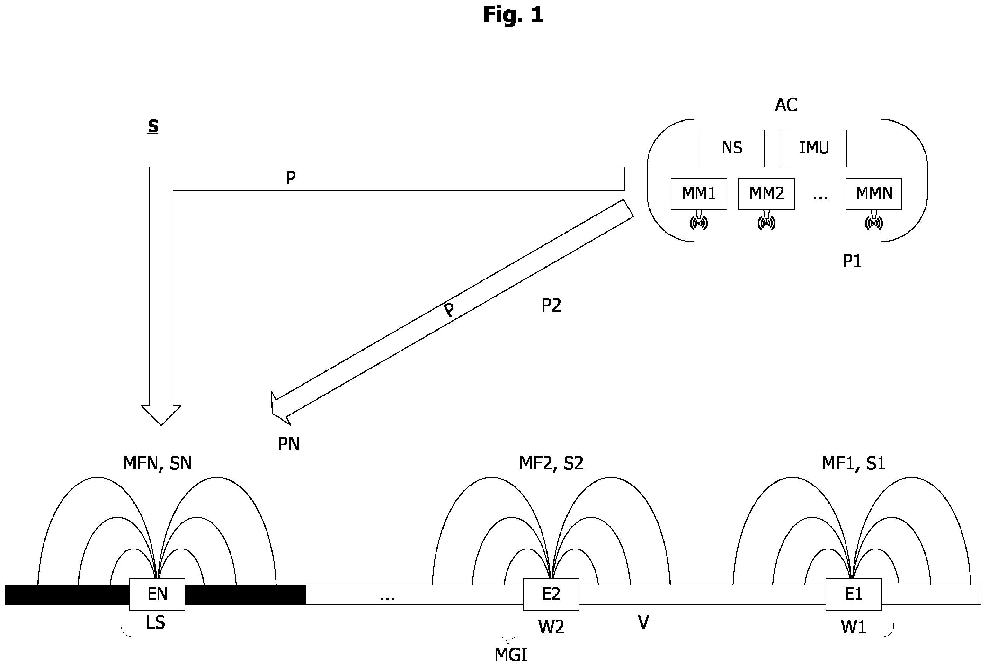

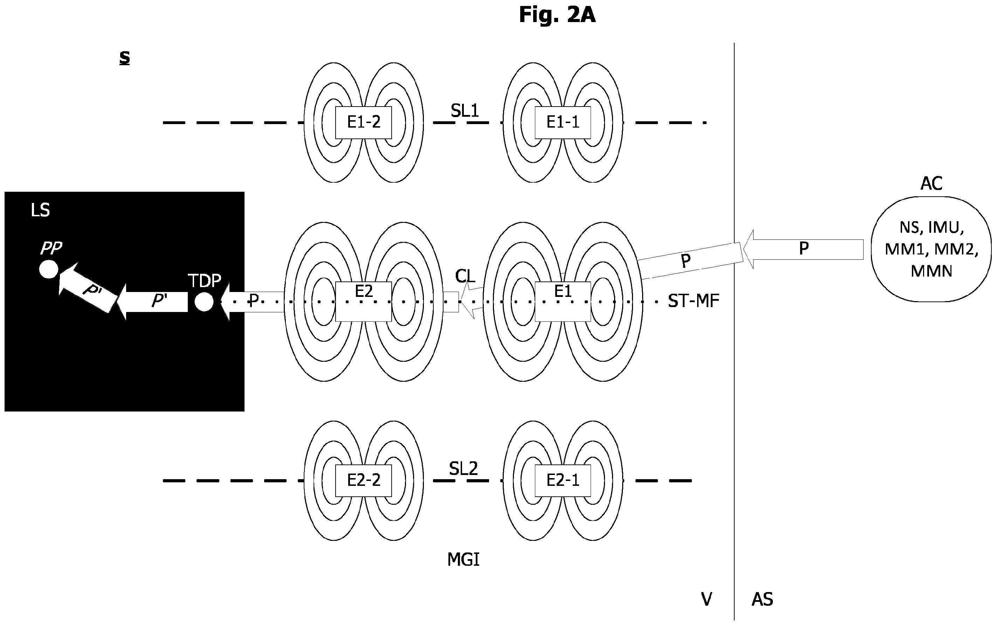

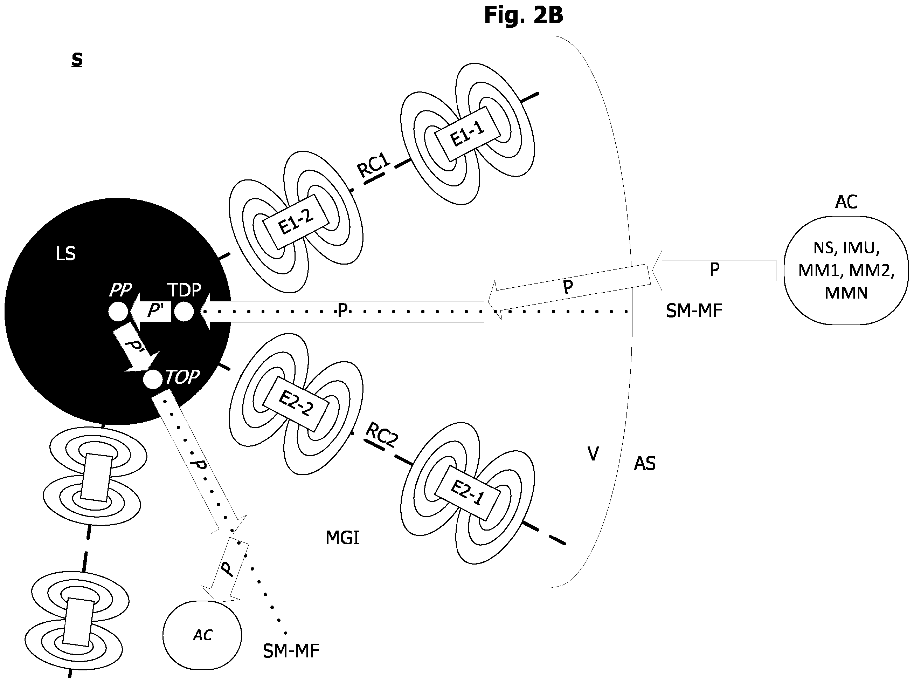

Fig. 1 shows a system S (such as an aircraft guidance and/or navigation system S) according an embodiment of the present disclosure, which comprises a magnetic ground infrastructure MGI and an aircraft AC according to embodiments of the present disclosure. That is, the aircraft guidance and/or navigation system S preferably uses an artificial (i.e., man-made) magnetic ground infrastructure MGI and the aircraft AC (to be further described hereinbelow) having a navigation system NS and a magnetometer MM1, MM2, MMN (summarized as "MM" hereinbelow) on board, in which the magnetometer MM measures the magnetic field strength and/or direction of the artificial magnetic ground infrastructure MGI. The navigation system NS preferably uses said measurements for absolute or relative (e.g. distance/direction relative to a landing site LS, such as a runway, landing strip or touch down point TDP - see Figs. 2A and 2B) positioning and navigation. In analogy, one may think of runway lights guiding a pilot along a path P towards (or from) the runway and helping him/her to maintain the correct landing directions and altitude and to hit the desired touch down point TDP on the landing site LS. Such a desired path P (e.g. glidepath) preferably is defined by 3D waypoints, wherein the 3D waypoints preferably are defined by magnetic total field strength and/or magnetic field vector values (to be described hereinbelow).

The magnetic ground infrastructure MGI according to the embodiment, in the aircraft guidance and/or navigation system S, is to guide the aircraft AC towards (or from) the landing site LS, wherein the magnetic ground infrastructure MGI comprises one or more emitters E1, E2, EN (summarized as "E" hereinbelow) assigned to a vicinity V of the landing site LS, each emitter E being adapted to generate a respective unique artificial magnetic field MF1, MF2, MFN (summarized as "MF" hereinbelow). The magnetic ground infrastructure MGI, or more precisely the emitters E, may be installed above, on/in (as shown in Fig. 1) or below the ground.

Notably, an artificial magnetic field being "unique" can mean "global uniqueness" in the sense that the field has a well-defined, catalogued uniqueness among all artificial fields used in an area, such as several landing sites on an airport (or even on country-wide or even world-wide scale), but could as well mean "local uniqueness" in that only a given aircraft is able to distinguish one artificial magnetic field MF on its path P form another artificial magnetic field MF in its path P. In this regard, each of the one or more unique artificial magnetic fields MF preferably has its own unique signature S1, S2, SN (summarized as "Sig" hereinbelow) without being restricted thereto.

Moreover, the respective emitters E may be implemented as follows. At least one of the emitters E preferably is a switchable magnet. In that case, the unique signature Sig (of said emitter E) preferably is constituted by a unique switching frequency, unique field strength, unique field directionality, unique field size and/or unique field shape of the field emitted by the switchable magnet which can be an electromagnet or a mechanically switchable magnet. In this regard, an order of magnets/emitters E with different strengths and/or magnetic field orientations preferably defines a desired direction/path P towards (or from) the landing site LS (e.g., landing strip or touch down point TDP, or parking position PP) - notably, when said magnets/emitters E are switchable, different flight paths P can be defined. Still further, when the magnetic ground infrastructure MGI forms a (straight) line of individual and switchable magnetic fields MF, said magnetic ground infrastructure MGI preferably allows for an implementation of so-called "follow me" manoeuvres, e.g. to guide the aircraft AC, after landing on the landing site LS, to a parking position PP e.g. by following the strongest signal/artificial magnetic field MF (see Fig. 1, emitter EN implemented directly in the landing site LS and Figs. 2A and 2B, optional path P' to/from optional parking position PP).

In addition or alternatively to the switchable magnet, at least one of the emitters E preferably is a permanent magnet (such as a Neodymium magnet). In that case, the unique signature Sig preferably is constituted by a unique field strength, unique field directionality, unique field size and/or unique field shape of the field emitted by the permanent magnet or a unique arrangement of several magnets.

For both of the above cases of switchable magnet and permanent magnet, the following options may apply:
- In order to generate the unique field size and/or unique field shape of the magnetic field MF, said magnets preferably are attached to (respectively unique) iron structures. Said iron structures may thus act as an amplifier and/or as a shaper of the magnetic field MF.
- Said magnets/emitters E preferably have omnidirectional or directional field characteristics - in the latter case, preferably allowing to identify specific directions / magnetic vector field. Also in the latter case, the artificial magnetic field MF preferably provides at least one direction which is usable to identify the flight direction/path P towards (or from) the landing site LS (e.g. landing strip or touch down point TDP).
   As non-restrictive realization/implementations of a directional field, there preferably are (i) coil arrays and multiple-input multiple-output (MIMO) systems that use electrical magnets arranged e.g. as MIMO coil arrays enabling beamforming (e.g. by adjusting the phase, current, or impedance of individual coils, the combined magnetic field can be steered toward a desired target/axis) and/or (ii) so-called active metasurfaces (such as reconfigurable metasurfaces with active circuits, e.g., tuneable resistors and capacitors) that may dynamically adjust impedance to shape magnetic fields.
- Said magnets/emitters E have known magnetic field strengths (in order to identify them in position or order or number). For example, a known number of magnets/emitters E leads to the desired landing site LS (e.g. touch down point TDP) or a specific field strength preferably indicates a certain direction or distance to the landing site LS (e.g. landing strip or touch down point TDP).

Still further, at least one of the emitters E preferably is stationary, while additionally or alternatively, at least one (other) of the emitters E is preferably mobile. In other words, the artificial magnetic field(s) MF is/are produced by a stationary and/or mobile magnetic ground infrastructure MGI in the vicinity V of the landing site LS (e.g. landing strip or touch down point TDP). The mobile magnetic ground infrastructure MGI might be used for ad-hoc definition of a landing site LS (e.g. a runway), such as emergency or military applications. In turn, the stationary magnetic ground infrastructure MGI e.g. on/in the ground of a runway or other areas for the aircraft AC to manoeuvre on, contains said magnetic ground infrastructure MGI alternatively in the form of electric cables allowing the aircraft AC to autonomously follow a predefined line or avoid to leave the runway or other area.

Still further, the magnets/emitters E preferably are located on known positions relative to the landing site LS (e.g. landing strip or touch down point TDP), such as in the vicinity V of the landing site LS. In this regard, the magnetic ground infrastructure MGI preferably further comprises two or more of the emitters E in a predetermined mutual relationship - in that case, the predetermined mutual relationship preferably is unique field strengths of the fields emitted by the emitters, unique orientations of the fields emitted by the emitters and/or unique mutual distances between the emitters. Moreover, the magnetic ground infrastructure MGI preferably is arranged as points, lines or areas or a mixture thereof. In addition or alternatively, the magnets/emitters E (of the magnetic ground infrastructure MGI) preferably are positioned in elongation of a landing strip (as a particular example of the landing site LS, see e.g. Fig. 2A described hereinbelow) or along a defined flight path P towards (or from) the landing site LS (e.g. landing strip or touch down point TDP).

Next to the above-described magnetic ground infrastructure MGI, a further component of the system S is the aircraft AC described in the following. That is, the aircraft AC, in an aircraft guidance and/or navigation system S, is to be guided towards (or from) the landing site LS, the aircraft AC comprising the one or more magnetometers MM1, MM2, MMN (summarized as "MM" hereinbelow) adapted to detect one or more unique artificial magnetic fields MF assigned to a vicinity V of the landing site; and the navigation system NS adapted to calculate a relative or an absolute position of the aircraft in relation to the landing site, based on detection result of the one or more magnetometers. For instance, said one or more magnetometers MM preferably are mounted on the aircraft AC in a defined distance to each other and in a known angle relative to a local aircraft coordinate system (therefore, orientation of the magnetometers relative to the main flight direction is preferably known, e.g. 90°). Moreover, the navigation system NS preferably constantly receives sensor data from the magnetometers MM and matches such sensor data with data e.g. stored in a database (not shown) in order to calculate an absolute (or relative) position on or above the earth's surface or to enhance position data from other sources (e.g. a vision based system). Moreover, said one or more magnetometers MM preferably are adapted to filter out any disturbance and/or noise imposed on said one or more unique artificial magnetic fields MF, in particular, any disturbance and/or noise imposed by natural magnetic fields resulting e.g. from the earth's magnetic field (involving e.g. core field and/or anomaly field) or from transient magnetic events (such as solar storms), or imposed by internal or external artificial magnets/emitters (such as artificial magnetic fields emitted by on-board equipment of the aircraft itself or by third party equipment, such as passengers' electronic equipment).

As a further non-restricting example, rather than filtering out the earth's magnetic anomaly field, the navigation/system according to the present disclosure may in fact additionally use the earth's magnetic anomaly field (sometimes dubbed as "Magnetic Navigation (MagNav)") in order to leverage unique magnetic signatures present in different locations in said anomaly filed on earth (e.g. for navigating towards the airport (funnel) with less position accuracy as the required data of the natural magnetic field might be coarse in resolution). Without loss of generality, such a scheme may perform the following additional steps:
1. Magnetic Field Measurement: The system S may use magnetometers MM to measure a local magnetic field, including the earth's core field and crustal anomalies.
2. Isolating Crustal Anomalies: Advanced AI models and algorithms may be employed to filter out noise and isolate the crustal magnetic field from other magnetic sources, such as the earth's core field, space weather, and electronic devices.
3. Map Comparison: The measured magnetic field data may be compared with pre-existing high-fidelity magnetic anomaly maps, such as the World Digital Magnetic Anomaly Map (WDMAM).
4. Position Determination: By matching the measured magnetic field profile with the stored map data, the system S may estimate the position of the aircraft AC.
5. Integration with Other Systems: MagNav may be integrated with inertial navigation systems (INS) to provide more accurate and robust navigation.

The aircraft AC preferably further comprises an inertial measurement unit IMU adapted to assist the navigation system NS by navigating between a first waypoint W1 defined by a first unique artificial magnetic field MF1 and a second waypoint W2 defined by a second unique artificial magnetic field MF2. In other words, the IMU preferably is used to navigate between waypoints W1, D2 marked with an artificial magnetic field MF1, MF2. This is advantageous in that the distance between two emitters E could be made larger up to a scale where the aircraft AC loses contact to a previous emitter/waypoint before it is capable of detecting the next emitter/waypoint in a row of emitters/waypoints.

Still further, the aircraft AC preferably contains an altitude measuring device (not shown), e.g. a barometer, which is preferably also connected to the navigation system NS. Said altitude measuring device, e.g. a barometer, preferably is used to estimate the field strength for a given flight altitude for the magnetic ground infrastructure MGI, so that the navigation system NS is capable of calculating e.g. a speed value based on at least two identified magnetic ground infrastructure components (magnets/emitters E or magnetic fields MF, respectively).

Even further still, there may be a method to guide the aircraft AC (or aerial vehicle in general) to follow switchable magnets/emitters E (e.g. arranged in a row) that cause dynamic magnetic fields MF. In that case, the vehicle/aircraft AC preferably just follows the strongest signal, which has that advantage that field strengths can be made stronger compared to a static field with the same costs, less complex sensors needed, harder to detect etc.

Fig. 2A shows a first implementation of the system S (such as the aircraft guidance and/or navigation system) that comprises the magnetic ground infrastructure MGI and the aircraft AC according to embodiments of the present disclosure. Notably, the landing site LS shown in Fig. 2A could be substantially quadratic, but could also be the beginning of a runway on which a conventional gliding aircraft AC decelerates after having "hit" the touch down point TDP.

That is, two or more of the emitters E1, E2, E1-1, E1-2, E2-1, E2-1 of the magnetic ground infrastructure MGI (the example of Fig. 2A shows 6 emitters, which is non-restricted) are preferably arranged in one or more mutually parallel rows (preferably straight lines) CL, SL1, SL2 towards (or from) the landing site LS. Particularly preferably, emitters E1 and E1 are arranged on a centreline CL of emitters E each having a predetermined level of field strength, wherein an (imaginary) elongation of said centreline intersects with (a main longitudinal axis of) the landing site LS. Optionally, there is at least one side-line SL1, SL2 of emitters (two side-lines with two respective emitters, which is non-restrictive), said at least one side-line SL1, SL2 (i) being parallel to the centreline CL and (ii) each having a field strength MF different from (preferably below the) predetermined level (without loss of generality, depicted in Fig. 2A in that emitters E1 and E2 have a "bigger" field in relation to the fields emitted by the emitters E1-1, E1-2, E2-1 and E2-2).

In the above configuration, the navigation system NS of the aircraft AC preferably is adapted to indicate a path P along a strongest magnetic field strength ST-MF (denoted by the dotted line) for the aircraft AC to follow. In a non-restricting embodiment, the line of the strongest magnetic field strength ST-MF may (substantially) coincide with the centreline CL.

In other words, there preferably is a known arrangement of a selection of magnets/emitters E (having different strength and/or different orientation of the magnets and/or position of the magnets relative to each other), e.g. a row of magnets/emitters E with each row having a unique distance to the next row or stronger magnets/emitters E1, E2 in the centreline CL and weaker magnets/emitters E1-1, E1-2, E2-1 and E2-2 in side-lines SL1, SL2 besides the centreline CL. Such an arrangement could (also) be considered to provide a unique fingerprint/signature, and therefore, a known position detectable by the aircraft AC, like a control point, which then is usable for relative or absolute positioning of the aircraft AC.

In still other words, there may be a method to guide the aircraft AC (or aerial vehicle in general) in the air or on the ground by following the artificial magnetic ground infrastructure MGI e.g. implemented as point(s) or line marker(s) embedded in the ground surface (e.g. tarmac), which preferably indicate a centreline CL to be followed by the aircraft AC. In this case, the field strength continuously measured by the (magnetometers MM of the) aircraft AC would get lower once the aircraft AC would move away from said centreline CL. Accordingly, the aircraft AC preferably would just need to follow the line CL of the strongest magnetic field strength in one direction (not involving 180° turns).

Optionally, e.g. additional emitters EN emitting artificial magnetic fields MF (see Fig. 1) on/in the landing site LS (such as a runway) may allow so-called "follow me" manoeuvres, e.g. to guide the aircraft AC, after landing on the landing site LS (e.g. on the touch down point TDP), to the parking position PP along path P'.

Fig. 2B shows a second implementation of the system S (such as the aircraft guidance and/or navigation system) that comprises the magnetic ground infrastructure MGI and the aircraft AC according to embodiments of the present disclosure. In Fig. 2B, the landing site LS is shown in a circular form, which is non-restrictive, mainly to accommodate vertically landing/lift-off aircraft AC, which is also non-restrictive.

In this regard, the magnetic ground infrastructure MGI preferably further comprises four or more of the emitters E1-1, E1-2, E2-1, E2-2 arranged in at least two rows (preferably straight lines) RC1, RC2 converging, in the manner of a funnel, towards (a centre of) the landing site LS. Notably, this does not preclude that the funnel converges e.g. to a touch down point TDP at the end of a runway, i.e., an elongated rectangular landing site LS rather than a circular landing site LS. In said configuration, the navigation system NS of the aircraft AC preferably is adapted to indicate a path P along a most different (preferably smallest) magnetic field strength SM-MF (without loss of generality, denoted by the dotted line) for the aircraft AC to follow - assuming, as a non-restricting example, that the field strengths emitted by each emitter E are equal, a line of the most different (preferably smallest) magnetic field strength SM-MF may (substantially) coincide with the angle bisector of the angle enclosed by the converging rows/lines RC1 and RC2.

In a non-restricting embodiment, the above configuration may mean that the aircraft AC is given a landing corridor (or landing sector) as shown in Fig. 2A - it follows that there could even be several landing corridors/sectors covering a sector (such as 120°) of a full circle, or even one or more landing corridors/sectors combined with one or more take-off/lift-off corridors/sectors (depicted by take-off point TOP). Such a configuration could also be used as a form of aerial vehicle launcher used e.g. on a civilian or military vessel, where the circular landing site LS can be turned in the manner of a turntable, but the vicinity V and the magnetic ground infrastructure MGI are fixed, so that "slots"/sectors of the landing site LS storing e.g. a drone can be turned into the "funnel end position" for lift-off of a drone or an empty "slot"/sector of the landing site LS is turned into the "funnel end position" for landing of a drone. In other words, the magnetic ground infrastructure MGI preferably defines a funnel, i.e. the boarders of the funnel that are defined by artificial magnetic fields MF, so that the aircraft AC preferably will be guided to the wider end of the funnel (with lower precision needed for this), and then the funnel tapers towards (or from) the touch down point TDP. The (magnetometers MM of the) aircraft AC preferably measures the magnetic strength and steer its position inside the funnel by seeking for the smallest field strengths SM-MF.

In addition, there may be a method to guide the aircraft AC (or aerial vehicle in general) in the air or on the ground by using the above-described funnel defined by the artificial magnetic fields MF.

Optionally, e.g. additional emitters EN emitting artificial magnetic fields MF (see Fig. 1) on/in the landing site LS (such as a runway or landing platform) may allow so-called "follow me" manoeuvres, e.g. to guide the aircraft AC, after landing on the landing site LS (e.g. on the touch down point TDP), to the parking position PP along path P'. Moreover, optionally, a similar approach may be taken to guide the aircraft AC from the parking position PP to the take-off point TOP.

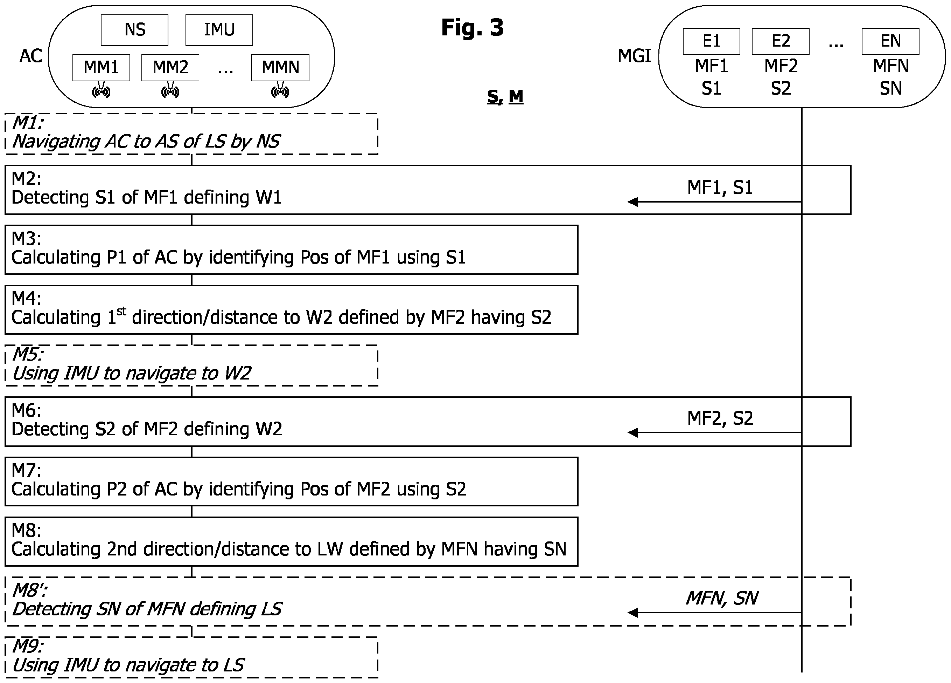

Fig. 3 shows a method M in the system S (such as the aircraft guidance and/or navigation system) according to an embodiment of the present disclosure. That is, there is a method M, in an aircraft guidance and/or navigation system S, to guide the aircraft AC towards (or from) the landing site LS using measurements, onboard the aircraft AC, of the one or more unique artificial magnetic fields MF1, MF2, MFN assigned to the vicinity V of the landing site LS.

In an optional step M1, the navigation system NS of the aircraft AC may perform navigating the aircraft AC to an approach site AS of the landing site LS (see Figs. 2A and 2B, right-hand arrow P). Said approach site AS may be a zone or ring outside the vicinity V in which an outermost emitter E of the magnetic ground infrastructure MGI is not (yet) detectable by the approaching aircraft AC.

In step M2, the one or more magnetometers MM of the aircraft AC perform detecting a first unique signature S1 of a first unique artificial magnetic field MF1 defining a first waypoint W1 (as is also shown Fig. 1).

In step M3, the navigation system NS of the aircraft AC performs calculating a first position P1 of the aircraft AC by identifying a position of the first detected unique artificial magnetic field MF1 using the first unique signature S1 (as is also shown Fig. 1). For example, the position of the first detected unique artificial magnetic field MF1 may coincide with the first waypoint W1 and may be known e.g. from predetermined map material.

In step M4, the navigation system NS of the aircraft AC performs calculating a first direction and distance (see Figs. 2A and 2B, middle arrow P) to a second waypoint W2 defined by a second unique artificial magnetic field MF2 having a second unique signature S2 (as is also shown Fig. 1).

In an optional step M5, the navigation system NS of the aircraft AC may perform using the inertial measurement unit IMU of the aircraft AC to navigate to the second waypoint W2 (see Figs. 2A and 2B, middle arrow P).

In step M6, the magnetometers MM of the aircraft AC perform detecting the second unique signature S2 of the second unique artificial magnetic field MF2 defining the second waypoint W2.

In step M7, the navigation system NS of the aircraft AC performs calculating a second position P2 of the aircraft AC by identifying a position of the second detected unique artificial magnetic field MF2 using the second unique signature S2. For example, the position of the second detected unique artificial magnetic field MF2 may coincide with the second waypoint W2 and may be known e.g. from predetermined map material.

In step M8, the navigation system NS of the aircraft AC performs calculating a second direction and distance to the landing site LS (see Figs. 2A and 2B, left-hand arrow P) defined by a third unique artificial magnetic field MFN having a third unique signature SN.

In optional step M8', the magnetometers MM of the aircraft AC may perform detecting the third unique signature SN of the third unique artificial magnetic field MFN defining the landing site LS.

In optional step M9, the navigation system NS of the aircraft AC performs using the inertial measurement unit IMU to navigate to the landing site LS (see Figs. 2A and 2B, left-hand arrow P).

Notably, the present invention has been described above in the context of a landing procedure of the aircraft AC, approaching a landing site LS and "hitting" the touch down point TDP (which may not be identical to a final parking position PP of the aircraft AC in case of a conventional gliding aircraft AC or may be identical to the final parking position PP in case of any vertically landing/lift-off aircraft AC, such as a helicopter or a drone, as described above). This does not preclude that the present invention is applied "in reverse", meaning that the aircraft AC is guided/accelerated, while still being on ground, from the parking position PP to a take-off point TOP (or lift-off point in case of a vertically landing/lift-off aircraft AC), after which the magnetic ground infrastructure MGI is used to safely guide the aircraft away from the landing site LS (which then becomes a starting site) to the approach site AS (which then becomes a leaving site). An example of this is shown in Fig. 2B, where an aircraft AC is guided from the parking position PP to the take-off point TOP, starts from the take-off point TOP and is then guided through a take-off corridor (or take-off "sector"). When the aircraft AC has reached a safe distance from the landing/starting site, it is allowed to deviate from the take-off corridor/sector.

Furthermore, the present invention has been described above in the context of substantially path-oriented navigation. This does not rule out an implementation in an area-oriented navigation comparable to using e.g. beacons. In this regard, it is also feasible that two (three) or more of the unique magnetic fields are used for cross-bearing (triangulating) the position of the aircraft AC. In this case, the magnetometers MM of the aircraft AC are preferably capable of measuring several spatial directions simultaneously, as is the case e.g. for so-called fluxgate magnetometers.

Still further, the present invention has been described above in the context of a navigation along straight lines (i.e., the emitters E of the magnetic ground infrastructure MGI being arranged on straight lines). This does not rule out other feasible geometric shapes of rows of emitters E, such as along a curved path/arc defining a curved approach path P for the aircraft AC rather than a straight approach path P.

Even further still, the present invention has been described above in the context of the emitters E/unique artificial magnetic fields MF tracing/highlighting a path P for the aircraft to follow. This concept could be extended to (additionally) place emitters E/unique artificial magnetic fields MF in order to define catch lines. Navigation using catch line can thus act as a (further) means of orientation. Without loss of generality, such catch lines may be implemented as follows:
1. A catch line might be defined by a series of punctual artificial magnetic fields or one or more linear artificial magnetic fields and might have a unique signature.
2. During flight, such catch lines serve the following purposes:
   - Avoiding unnoticed passing of a U-turn-point
   - Allowing to locate the aircraft AC along the catch line -
3. In case a navigation system or pilot loses orientation, s/he can continue on the previous course until reaching the next catch line
4. As soon as the catch line is reached, the navigation system or a pilot can roughly assess the aircraft's position anew, at least insofar s/he knows that the aircraft's position is somewhere along the line constituted by the catch line/landmark
5. When approaching a destination/landing site LS, a catch line can also act as a warning to the navigation system or a pilot that reaching the destination/landing site LS is imminent or that the destination/landing site LS has already passed.

Such a system might also be used to avoid a flying aircraft leaving a defined area and might be used also in conjunction with other navigations means.

It is believed that the advantages of the technique presented herein will be fully understood from the foregoing description, and it will be apparent that various changes may be made in the form, constructions and arrangement of the exemplary aspects thereof without departing from the scope of the present disclosure or without sacrificing all of its advantageous effects. Because the technique presented herein can be varied in many ways, it will be recognized that the present disclosure should be limited only by the scope of the claims that follow.

## Claims

1. A method (M), in an aircraft guidance and/or navigation system (S), to guide an aircraft (AC) towards or from a landing site (LS) using measurements, onboard the aircraft, of one or more unique artificial magnetic fields (MF1, MF2, MFN) assigned to a vicinity (V) of the landing site.

2. The method of claim 1, when the aircraft is guided towards the landing site, the method further comprising:
detecting (M2) a first unique signature (S1) of a first unique artificial magnetic field (MF1) defining a first waypoint (W1);
calculating (M3) a first position (P1) of the aircraft by identifying a position of the first detected unique artificial magnetic field using the first unique signature;
calculating (M4) a first direction and distance to a second waypoint (W2) defined by a second unique artificial magnetic field (MF2) having a second unique signature (S2);
detecting (M6) the second unique signature of the second unique artificial magnetic field defining the second waypoint;
calculating (M7) a second position (P2) of the aircraft by identifying a position of the second detected unique artificial magnetic field using the second unique signature; and
calculating (M8) a second direction and distance to the landing site defined by a third unique artificial magnetic field (MFN) having a third unique signature (SN).

3. The method of claim 2, further comprising:
between calculating (M4) the first direction and distance and detecting (M6) the second unique signature, using (M5) an inertial measurement unit (IMU) of the aircraft to navigate to the second waypoint; and
after calculating (M8) the second direction and distance, using (M9) the inertial measurement unit to navigate to the landing site.

4. The method of claim 2 or 3, further comprising:
before detecting (M2) the first unique signature, navigating (M1) the aircraft to an approach site (AS) of the landing site by a navigation system (NS) of the aircraft.

5. A magnetic ground infrastructure (MGI) in an aircraft guidance and/or navigation system (S), to guide an aircraft (AC) towards or from a landing site (LS), the magnetic ground infrastructure comprising:
one or more emitters (E1, E2, EN) assigned to a vicinity (V) of the landing site, each emitter being adapted to generate a respective unique artificial magnetic field (MF1, MF2, MFN).

6. The magnetic ground infrastructure of claim 5, wherein:
each of the one or more unique artificial magnetic fields has its own unique signature (S1, S2, SN).

7. The magnetic ground infrastructure of claim 6, wherein:
at least one of the emitters is a switchable magnet, wherein preferably, the unique signature is constituted by a unique switching frequency, unique field strength, unique field directionality, unique field size and/or unique field shape of the field emitted by the switchable magnet; and/or
at least one of the emitters is a permanent magnet, wherein preferably, the unique signature is constituted by a unique field strength, unique field directionality, unique field size and/or unique field shape of the field emitted by the permanent magnet.

8. The magnetic ground infrastructure of any one of claims 5 to 7, wherein:
at least one of the emitters is stationary; and/or
at least one of the emitters is mobile.

9. The magnetic ground infrastructure of any one of claims 5 to 8, further comprising:
two or more of the emitters in a predetermined mutual relationship, wherein preferably, the predetermined mutual relationship is unique field strengths of the fields emitted by the emitters, unique orientations of the fields emitted by the emitters and/or unique mutual distances between the emitters.

10. The magnetic ground infrastructure of any one of claims 5 to 9, further comprising:
two or more of the emitters (E1, E2, E1-1, E1-2, E2-1, E2-1) arranged in one or more mutually parallel rows (CL, SL1, SL2) towards or from the landing site,
preferably arranged in one or more mutually parallel straight lines,
particularly preferably arranged with a centreline (CL) of emitters each having a predetermined level of field strength, an elongation of said centreline intersecting with the landing site, and with at least one side-line (SL1, SL2) of emitters (i) being parallel to the centreline and (ii) each having a field strength different from, most preferably below, the predetermined level.

11. The magnetic ground infrastructure of any one of claims 5 to 9, further comprising:
four or more of the emitters (E1-1, E1-2, E2-1, E2-2) arranged in at least two rows (RC1, RC2) converging, in the manner of a funnel, towards or from the landing site,
preferably arranged in at least two straight lines.

12. An aircraft (AC) in an aircraft guidance and/or navigation system (S), to guide the aircraft towards or from a landing site (LS), the aircraft comprising:
one or more magnetometers (MM1, MM2, MMN) adapted to detect one or more unique artificial magnetic fields (MF1, MF2, MFN) assigned to a vicinity (V) of the landing site; and
a navigation system (NS) adapted to calculate a relative or an absolute position of the aircraft in relation to the landing site, based on detection result of the one or more magnetometers.

13. The aircraft of claim 12, further comprising:
an inertial measurement unit (IMU) adapted to assist the navigation system by navigating between a first waypoint (W1) defined by a first unique artificial magnetic field and a second waypoint (W2) defined by a second unique artificial magnetic field.

14. The aircraft of claim 12 or 13, wherein:
when there is a straight centreline (CL) of unique artificial magnetic fields each having a predetermined level of field strength, an elongation of said centreline intersecting with the landing site, and when there further is at least one straight side-line (SL1, SL2) of unique artificial magnetic fields (i) being parallel to the centreline and (ii) each having a field strength different from, preferably below the, predetermined level, the navigation system is adapted to indicate, if the field strength is below the predetermined level, a path (P) along a strongest magnetic field strength (ST-MF) for the aircraft to follow.

15. The aircraft of claim 12 or 13, wherein:
when there are four or more of the unique artificial magnetic fields arranged in at least two straight lines (RC1, RC2) converging, in the manner of a funnel, towards the landing site, the navigation system is adapted to indicate a path (P) along a most different, preferably smallest, magnetic field strength (SM-MF) for the aircraft to follow.

## Amended claims

### Amended claims in accordance with Rule 137(2) EPC.

1. A magnetic ground infrastructure (MGI) for an aircraft guidance and/or navigation system (S), to guide an aircraft (AC) towards or from a landing site (LS), the magnetic ground infrastructure comprising:
plural emitters (E1, E2, EN) assigned to a vicinity (V) of the landing site, each emitter being adapted to generate a respective unique artificial magnetic field (MF1, MF2, MFN), wherein the vicinity in relation to said landing site is an area or zone in the approach path of the aircraft towards or from the landing site,
wherein:
two or more of the emitters (E1, E2, E1-1, E1-2, E2-1, E2-1) are arranged, towards or from the landing site, in mutually parallel straight lines (CL, SL1, SL2) arranged with:
- a centreline (CL) of emitters each having a predetermined level of field strength, an elongation of said centreline intersecting with the landing site, and
- at least one side-line (SL1, SL2) of emitters (i) being parallel to the centreline and (ii) each having a field strength different from the predetermined level.

2. A magnetic ground infrastructure (MGI) for an aircraft guidance and/or navigation system (S), to guide an aircraft (AC) towards or from a landing site (LS), the magnetic ground infrastructure comprising:
plural emitters (E1, E2, EN) assigned to a vicinity (V) of the landing site, each emitter being adapted to generate a respective unique artificial magnetic field (MF1, MF2, MFN), wherein the vicinity in relation to said landing site is an area or zone in the approach path of the aircraft towards or from the landing site,
wherein:
four or more of the emitters (E1-1, E1-2, E2-1, E2-2) are arranged in at least two straight lines (RC1, RC2) converging, in the manner of a funnel, towards or from the landing site.

3. The magnetic ground infrastructure of claim 1 or 2, wherein:
each of the unique artificial magnetic fields has its own unique signature (S1, S2, SN).

4. The magnetic ground infrastructure of claim 3, wherein:
at least one of the emitters is a switchable magnet.

5. The magnetic ground infrastructure of claim 4, wherein:
the unique signature is constituted by a unique switching frequency, unique field strength, unique field directionality, unique field size and/or unique field shape of the field emitted by the switchable magnet.

6. The magnetic ground infrastructure of any one of claims 3 to 5, wherein:
at least one of the emitters is a permanent magnet.

7. The magnetic ground infrastructure of claim 6, wherein:
the unique signature is constituted by a unique field strength, unique field directionality, unique field size and/or unique field shape of the field emitted by the permanent magnet.

8. The magnetic ground infrastructure of any one of claims 1 to 7, wherein:
at least one of the emitters is stationary; and/or
at least one of the emitters is mobile.

9. The magnetic ground infrastructure of any one of claims 1 to 8, further comprising:
two or more of the emitters in a predetermined mutual relationship.

10. The magnetic ground infrastructure of claim 9, wherein:
the predetermined mutual relationship is unique field strengths of the fields emitted by the emitters, unique orientations of the fields emitted by the emitters and/or unique mutual distances between the emitters.

11. An aircraft (AC) for an aircraft guidance and/or navigation system (S), to guide the aircraft towards or from a landing site (LS), the aircraft comprising:
one or more magnetometers (MM1, MM2, MMN) adapted to detect one or more unique artificial magnetic fields (MF1, MF2, MFN) assigned to a vicinity (V) of the landing site, wherein the vicinity in relation to said landing site is an area or zone in the approach path of the aircraft towards or from the landing site; and
a navigation system (NS) adapted to calculate a relative or an absolute position of the aircraft in relation to the landing site, based on detection result of the one or more magnetometers,
when there is a straight centreline (CL) of unique artificial magnetic fields each having a predetermined level of field strength, an elongation of said centreline intersecting with the landing site, and when there further is at least one straight side-line (SL1, SL2) of unique artificial magnetic fields (i) being parallel to the centreline and (ii) each having a field strength different from predetermined level, the navigation system is adapted to indicate, if the field strength is below the predetermined level, a path (P) along a strongest magnetic field strength (ST-MF) for the aircraft to follow.

12. An aircraft (AC) for an aircraft guidance and/or navigation system (S), to guide the aircraft towards or from a landing site (LS), the aircraft comprising:
one or more magnetometers (MM1, MM2, MMN) adapted to detect one or more unique artificial magnetic fields (MF1, MF2, MFN) assigned to a vicinity (V) of the landing site, wherein the vicinity in relation to said landing site is an area or zone in the approach path of the aircraft towards or from the landing site; and
a navigation system (NS) adapted to calculate a relative or an absolute position of the aircraft in relation to the landing site, based on detection result of the one or more magnetometers,
wherein: when there are four or more of the unique artificial magnetic fields arranged in at least two straight lines (RC1, RC2) converging, in the manner of a funnel, towards the landing site, the navigation system is adapted to indicate a path (P) along a most different magnetic field strength (SM-MF) for the aircraft to follow.

13. The aircraft of claim 11 or 12, further comprising:
an inertial measurement unit (IMU) adapted to assist the navigation system by navigating between a first waypoint (W1) defined by a first unique artificial magnetic field and a second waypoint (W2) defined by a second unique artificial magnetic field.
